# FASCICULE DE BREVET EUROPEEN

(11) **EP 3 311 333 B1**
(45) Date de publication et mention de la délivrance du brevet: **07.08.2019**
(21) Numéro de dépôt: 16739218.2
(22) Date de dépôt: 15.06.2016
(51) Int. Cl.: G06K 9/46

(54) **APPARIEMENT D'IMAGES D'ARTICLES POSTAUX AVEC DES DESCRIPTEURS DE SINGULARITES DU CHAMP DE GRADIENT**
PAARUNG VON BILDERN VON POSTSENDUNGEN MIT DESKRIPTOREN VON SINGULARITÄTEN DES GRADIENTENFELDS
PAIRING OF IMAGES OF POSTAL ARTICLES WITH DESCRIPTORS OF SINGULARITIES OF THE GRADIENT FIELD

(30) Priorité: 16.06.2015 FR 1555465
(43) Date de publication de la demande: 25.04.2018
(73) Titulaire: Solystic, 92220 Bagneux (FR)
(72) Inventeur: DESPREZ, Olivier, 78000 Versailles (FR)
(74) Mandataire: Prugneau, Philippe
(86) Numéro de dépôt international: PCT/FR2016/051442
(87) Numéro de publication internationale: WO 2016/203149

(56) Documents cités:
- US-A- 5 142 592
- RUI HU ET AL: "Gradient field descriptor for sketch based retrieval and localization", 2010 17TH IEEE INTERNATIONAL CONFERENCE ON IMAGE PROCESSING (ICIP 2010); 26-29 SEPT. 2010; HONG KONG, CHINA, IEEE, PISCATAWAY, NJ, USA, 26 septembre 2010 (2010-09-26), pages 1025-1028, XP031811055, ISBN: 978-1-4244-7992-4
- REUTER M ET AL: "Laplace-Beltrami eigenvalues and topological features of eigenfunctions for statistical shape analysis", COMPUTER AIDED DESIGN, ELSEVIER PUBLISHERS BV., BARKING, GB, vol. 41, no. 10, 1 octobre 2009 (2009-10-01), pages 739-755, XP026585080, ISSN: 0010-4485, DOI: 10.1016/J.CAD.2009.02.007 [extrait le 2009-02-27]
- "Differential structure of images" In: B. ter Haar Romeny: "Front-End Vision and Multi-Scale Image Analysis", 2003, Springer, XP002756065, pages 91-136, le document en entier

## Description

### Domaine technique

Le domaine de l'invention est celui de l'identification d'articles sans marquage, notamment pour le tri postal.

### Technique antérieure

En particulier, l'invention concerne un procédé de traitement d'articles selon lequel on forme une première image numérique d'un article et on dérive de cette première image une première signature d'image qui est un identificateur globalement unique pour ledit article, et dans lequel on forme de nouveau une image numérique courante pour ledit article et on dérive de l'image courante une signature courante qui est comparée à des premières signatures d'images d'articles enregistrées en mémoire dans une unité de traitement de données pour apparier par similarité cette signature courante avec une des premières signatures.

Jn exemple d'art antérieur concernant un descripteur de champ de gradient est l'article Rui Hu et al. - "Gradient field descriptor for sketch based retrieval and localization", 7-th IEEE International Conférence on Image Processing (ICIP'2010), 26-29 Sept. 2010, pp. 1025-1028, XP031811055.

Les articles sont en particulier des articles postaux triés automatiquement dans une machine de tri comprenant un système de reconnaissance/lecture automatique d'adresse de destinataire reconnue dans l'image numérique de l'article postal comportant cette adresse de destinataire et un convoyeur de tri qui dirige l'article postal vers une sortie de tri qui correspond à l'adresse de destinataire reconnue automatiquement.

On connaît déjà du brevet EP-1519796, un procédé pour identifier les articles de courrier sans marquage, par signature d'image.

Selon ce procédé, on forme une image numérique d'un article de courrier passant dans la machine de tri et on extrait de cette image une signature d'image définie par deux composantes, une composante dite graphique caractérisant les distributions globales et locales des niveaux de gris dans l'image et une autre composante dite textuelle qui caractérise les informations symboliques présentes dans l'image et notamment les caractères composant l'adresse de destinataire reconnue automatiquement par OCR.

Avec ce procédé connu d'identification d'articles de courrier, dans un processus de tri en plusieurs passes, on supprime l'apposition d'identificateurs à codes barres sur les articles de courrier.

Il n'y a plus lieu d'étiqueter les articles de courrier en première passe de tri ni de relire un code barres en passe ultérieure de tri.

Il en résulte des réductions de coûts pour réaliser un tri postal.

Toutefois, la composante graphique est faiblement discriminante lorsqu'il s'agit d'identifier des articles de courrier provenant d'un même expéditeur et qui sont graphiquement similaires et cette signature d'image est alors dépendante d'une bonne détection du bloc d'adresse de destinataire dans l'image et d'une bonne reconnaissance des caractères de cette adresse de destinataire.

### Résumé de l'invention

Le but de l'invention est de proposer une signature d'image encore plus discriminante pour s'adapter encore mieux à un contexte d'appariement d'images homogènes d'articles de courrier provenant d'un même expéditeur.

A cet effet, l'invention a pour objet un procédé de traitement d'articles postaux selon lequel on forme une première image numérique d'un article à une résolution de 2 à 10 pixels/mm et on dérive de cette première image une première signature d'image qui est un identificateur unique pour ledit article, et dans lequel on forme de nouveau une image numérique courante pour ledit article et on dérive de l'image courante une signature courante qui est comparée à des premières signatures d'images d'articles enregistrées en mémoire dans une unité de traitement de données pour apparier par similarité cette signature courante avec une des premières signatures, caractérisé en ce que chaque signature est dérivée d'une image numérique selon les étapes suivantes :
- extraction d'une carte numérique du champ de gradient de luminance de la dite image par régression planaire locale avec une matrice locale de par exemple 5x5 pixels avec ou sans chevauchement de façon à lisser dans la carte du champ de gradient les déformations de surface de l'article postal (par exemple les froissures de l'enveloppe) et rehausser l'information symbolique contenue dans l'image comme les caractères textuels (dont ceux de l'adresse de destinataire) et les graphismes contrastés,
- identification dans ladite carte numérique des points d'intérêt les plus robustes qui sont les singularités topologiques (positive ou négative) du champ de gradient de plus forte amplitude du champ vectoriel et qui correspondent à un extrema de divergence circulaire locale du champ de gradient qui apparait dans les régions concaves des éléments symboliques dans l'image ou aux extrémités des éléments symboliques dans l'image tels que les caractères alphanumériques du bloc d'adresse de destinataire,
- et représentation en mémoire par des descripteurs numériques des points d'intérêt qui sont indicatifs chacun pour un certain point d'intérêt :
   a) d'une position spatiale du point d'intérêt dans ladite image,
   b) d'un indice signé de singularité qui est calculé à partir d'une combinaison de différentes grandeurs physiques incluant une valeur de divergence circulaire moyenne du champ de gradient et de l'amplitude moyenne du champ de gradient dans une fenêtre d'analyse de pixels de l'image centrée sur ledit certain point d'intérêt, et
   c) d'une accumulation d'indices de singularité calculés sur les anneaux d'un disque de voisinage local circulaire centré sur ledit certain point d'intérêt.

L'idée à la base de l'invention est donc de rendre indépendants les attributs d'une signature d'image des informations textuelles reconnues par OCR dans l'image en utilisant comme attributs de signature des descripteurs de points d'intérêt de la topologie du champ de gradient de luminance dans l'image. Ces attributs de signature d'image restent discriminants même au sein d'un contexte d'images d'articles de courrier homogènes graphiquement.

Une résolution d'image de 2 à 10 pixels/mm est bien adaptée à l'individualisation de caractères textuels du bloc d'adresse de destinataire et dans le procédé selon l'invention la régression planaire locale peut se faire sur des portions d'images de 5x5 pixels.

Cette régression planaire locale permet en outre de lisser dans l'image du champ de gradient les déformations de surface de l'article de courrier (par exemple les froissures de l'enveloppe) au profit de l'information symbolique contenue dans l'image comme les caractères textuels (dont ceux de l'adresse de destinataire) et les graphismes contrastés.

Sur cette base, l'idée selon l'invention est de rechercher les points d'intérêt les plus robustes dans les singularités topologiques du champ de gradient symbolique, ici donc des points d'intérêt à forte convergence circulaire locale ou à forte divergence circulaire locale du champ de gradient.

Comme le niveau de luminance des éléments symboliques textuels est en général inférieur à celui du fond de l'enveloppe (caractères sombres sur fond clair), les zones de divergence circulaire locale du champ de gradient apparaissent aux extrémités des éléments symboliques tels que les caractères alphanumériques du bloc d'adresse de destinataire alors que les zones de convergence circulaire locale du champ de gradient apparaissent dans les régions concaves de ces éléments symboliques.

La taille du descripteur numérique des points d'intérêt, c'est à dire le nombre d'anneaux successifs autour du point d'intérêt considéré sur lequel on accumule les indices de singularité peut être fixé par l'a priori sur la taille spatiale des zones à discriminer, par exemple de l'ordre de 15 mm dans le cas d'une adresse destinataire d'un pli postal. Dans le processus de traitement des images numériques, il est possible de réaliser une contraction/dilatation des descripteurs numériques de points d'intérêt pour pallier les variations de profondeurs de champ qui entraînent une variation de la résolution des images entre la prise de la première image numérique d'un article postal et la prise de la seconde image numérique de cet article postal.

Le procédé selon l'invention peut présenter les particularités suivantes :
- pour comparer ladite signature courante aux dites premières signatures, on peut filtrer d'abord lesdites premières signatures pour éliminer de l'espace de recherche de concordance celles qui sont définies par un nombre de descripteurs de points d'intérêt très différent du nombre de descripteurs de point d'intérêt de la signature courante; à noter que ce filtrage permet d'optimiser l'appariement dans les cas où on suppose une relative identité des deux prises d'images pour un même objet (mêmes conditions d'éclairement et mêmes portions de l'objet photographiées). La comparaison s'effectue par une mesure de concordance, c'est à dire une mesure de distance de similarité entre les descripteurs de points d'intérêt des deux signatures à comparer.
- pour comparer ladite signature courante aux dites premières signatures, on réalise une première phase de recherche de concordance en utilisant dans la signature courante une petite partie des descripteurs de point d'intérêt pour présélectionner un sous-ensemble de premières signatures compatibles à la signature courante et une seconde phase de recherche de concordance sur ledit sous-ensemble de premières signatures compatibles en utilisant dans la signature courante l'ensemble des descripteurs de point d'intérêt. Dans cette seconde phase de recherche de concordance, on utilise non pas l'ensemble des points d'intérêt mais un sous-ensemble plus important que celui utilisé lors de la première phase de recherche de concordance. La première phase de recherche permet de réaliser un filtrage des objets postaux appartenant à une même famille structurelle, c'est-à-dire ayant en commun des mêmes structures graphiques et/ou textuelles présentent dans les images numériques. L'occurrence d'une concordance en seconde phase de recherche de concordance des points d'intérêt sur des images d'articles postaux appartenant à une même famille structurelle permet de quantifier le degré de discrimination de ces points d'intérêt de manière adaptative au contexte des articles postaux traités.
- les premières signatures sont enregistrées en mémoire d'une machine de tri postal automatique lors d'une première passe de tri des articles postaux et en ce que la comparaison de signatures est réalisée lors d'une seconde passe de tri de ces articles postaux dans cette machine ou dans une autre machine de tri automatique.

Un exemple de mise en oeuvre du procédé selon l'invention est décrit ci-après et illustré par les dessins.

### Présentation sommaire des dessins

La figure 1 illustre de façon très schématique le procédé d'extraction d'une signature d'image en première passe de tri d'articles de courrier.
La figure 2 illustre de façon schématique le procédé d'appariement de deux signatures d'image selon l'invention en seconde passe de tri des articles de courrier.
La figure 3 illustre plus en détail le procédé d'extraction des attributs d'une signature d'image.
La figure 4 illustre plus en détail le procédé d'appariement des attributs des signatures d'image.
La figure 5 illustre le principe de la régression planaire locale selon l'invention.
La figure 6 illustre une machine de tri postal pour la mise en oeuvre du procédé selon l'invention.
La figure 7 illustre une image numérique d'un article de courrier avec un bloc d'adresse de destinataire.

### Description des modes de réalisation

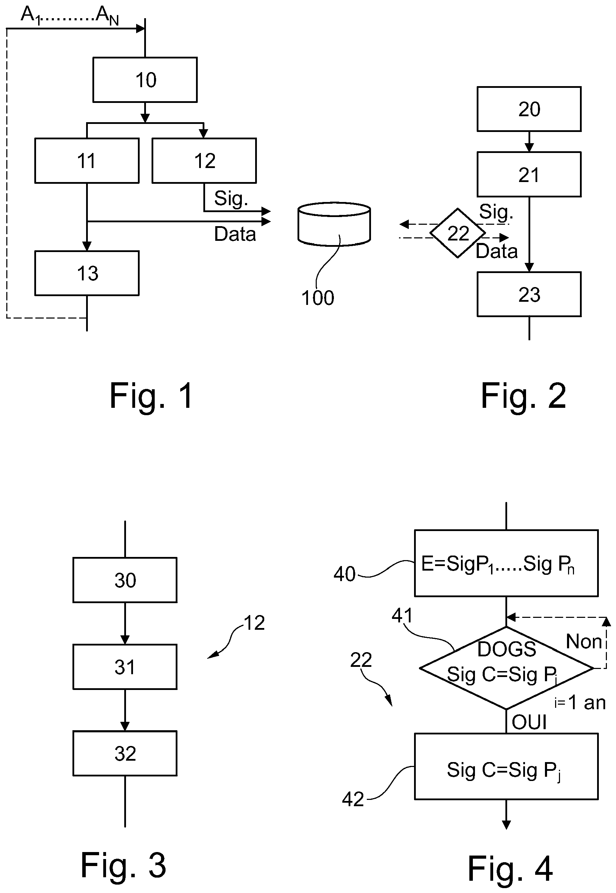

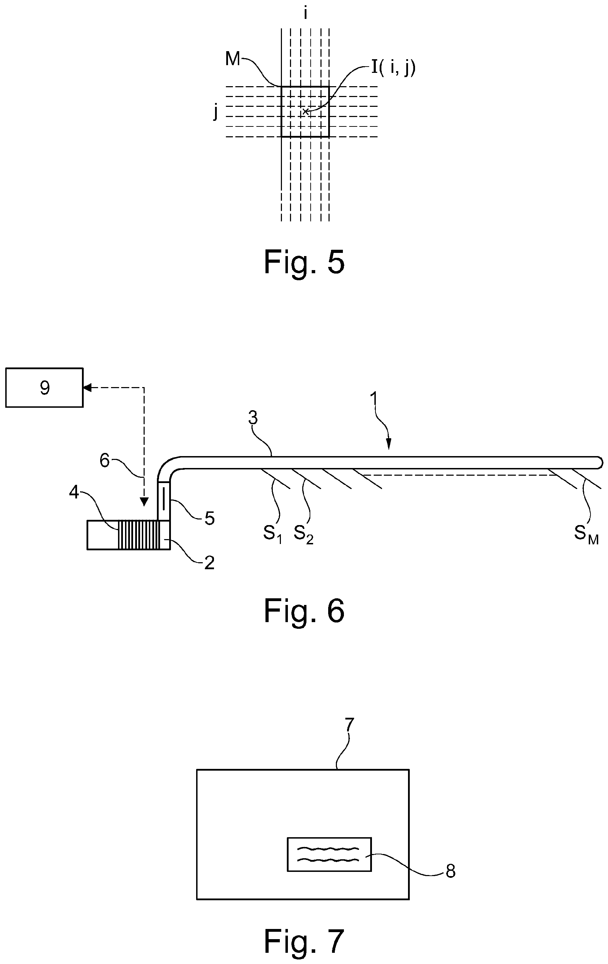

Les figures 1 et 2 illustrent donc la mise en oeuvre du procédé selon l'invention dans un processus de tri d'articles de courrier en deux passes de tri dans une machine de tri postal 1 illustrée figure 6 et comprenant par exemple un dépileur 2 alimentant un convoyeur de tri 3 en articles de courrier 4 disposés en pile sur chant en entrée de la machine.

Un système 5 de reconnaissance automatique d'adresse de destinataire visible figure 6 est disposé en aval du dépileur 2.

Le système de reconnaissance comprend une caméra 6 apte à former (étape 10 sur la figure 1) une image numérique illustrée par 7 sur la figure 7 par exemple en multi niveaux de gris d'une face d'un article en série sur chant dans la machine, cette image comportant l'adresse de destinataire illustrée par 8 sur la figure 7, et une unité de traitement de données 9 qui à partir de cette image est apte par l'intermédiaire d'un OCR à reconnaitre cette adresse dans l'image numérique (étape 11 dans la figure 1) .

L'unité de traitement de données 9 est apte aussi à extraire de l'image numérique une signature d'image (étape 12 dans la figure 1), indiquée par SIG sur les figures 1 et 2, qui sert d'identifiant unique pour l'article et qui est enregistrée dans une base de données, représentée par la référence 100 sur les figures 1 et 2, en relation avec l'adresse de destinataire reconnue qui constitue des données de tri indiquées par DATA pour la commande du convoyeur de tri 3.

Sur la base de cette adresse de destinataire reconnue, l'article est dirigé (étape 13 sur la figure 1) vers une sortie de tri S1, S2, ...SM correspondante du convoyeur de tri et ainsi de suite pour tous les articles 4 chargés en entrée de la machine de tri.

Sur la figure 2, un article est chargé en machine pour une seconde passe de tri.

La caméra 6 forme une image numérique courante de cet article (étape 20 sur la figure 2) et une signature courante d'image SIG est extraite de cette image courante (étape 21 sur la figure 2) et est comparée (étape 22 sur la figure 2) à des premières signatures d'articles enregistrées dans la base de données 100 pour détecter une similarité et récupérer sur la base de cette détection les données de tri DATA pour cet article afin de le diriger (étape 23 sur la figure 2) vers une sortie de tri correspondante du convoyeur de tri.

Sur la figure 3, on a illustré de façon très schématique le processus d'extraction d'une signature d'image selon l'invention qui est réalisé dans les étapes 12 et 21 des figures 1 et 2 respectivement.

Dans ce processus, dans une première étape de traitement en 30, on applique une régression planaire locale sur l'image numérique de l'article avec une matrice locale de par exemple de 5x5 pixels avec ou sans chevauchement, pour obtenir une carte numérique du champ de gradient de luminance.

La figure 5 illustre dans une image numérique I, la matrice locale de calcul 5x5 pixels du champ de gradient sous la référence M. Cette matrice M est centrée sur le pixel I(i,j) de l'image numérique de l'article.

A noter, que cette fenêtre d'analyse de 5x5 pixels est bien adaptée pour des images d'articles de courrier à une résolution comprise entre 2 et 10 pixels/mm car elle permet d'intégrer les déformations de surface de l'article qui apparaissent dans l'image telles que des froissures de l'enveloppe plastique, reflets et ombrages, etc... et de rehausser les zones d'information symbolique dans l'image comme les caractères textuels imprimés.

Ensuite dans l'étape 31, on recherche dans la carte du champ de gradient résultant de l'étape 30, des points d'intérêt qui correspondent à des singularités topologiques du champ de gradient à forte convergence circulaire locale ou a forte divergence circulaire locale.

En particulier, dans l'étape 31, les points d'intérêt sont les singularités de plus forte amplitude du champ vectoriel (positive ou négative) et qui correspondent à un extrema de convergence circulaire locale ou de divergence circulaire locale du champ de gradient.

Selon l'invention, les points d'intérêt retenus en sortie de l'étape 31 sont ceux qui présentent un indice signé de singularité (résultante d'une combinaison de la valeur de divergence ou de convergence circulaire moyenne du champ de gradient et de l'amplitude moyenne du champ de gradient dans la fenêtre d'analyse de 5x5 pixels) supérieur à un seuil réglable. Ce seuil permet de s'affranchir notamment de points d'intérêt parasites qui ont été détectés dans le fond de l'image.

De ce qui précède, on comprendra que les coefficients d'approximation planaire locale fournissent la composante horizontale et la composante verticale du champ vectoriel du gradient local ainsi que sa norme.

Un extrema de convergence ou de divergence circulaire locale peut être vu comme un extrema d'indice de singularité locale qui correspond à une forte convergence ou divergence circulaire du champ de gradient local. L'indice signé de singularité peut être vu comme le produit algébrique d'un indice de circularité locale (entre 0 et 1) et une valeur de divergence locale pouvant être positive ou négative suivant la convergence ou la divergence du champ de gradient localement à l'intérieur de la fenêtre d'analyse.

Plus particulièrement, le champ vectoriel du gradient présente des points de singularités d'autant plus singuliers que ce champ est localement de forte divergence/converge, de forte circularité et de forte amplitude. Ces indicateurs de convergence/divergence, de circularité et de forte amplitude peuvent être dérivés chacun d'une convolution de l'image numérique multi-niveaux de gris avec des masques de 3x3 et 5x5 pixels. L'indicateur de convergence/divergence peut correspondre à un masque de divergence classique avec lequel on détermine les variations d'amplitude du champ de gradient symbolique dans deux axes orthogonaux. L'indicateur de circularité peut correspondre à un masque avec lequel on observe une rotation du champ de gradient autour d'un point central du masque. Ce masque peut par exemple s'inspirer de ceux utilisés dans le domaine de caractérisation d'empreintes digitales.

Ensuite dans l'étape 32, on forme dans l'unité 9 un descripteur numérique pour chaque point d'intérêt du champ de gradient symbolique extrait à l'étape 31 qui contient des données représentatives de la position spatiale du point d'intérêt dans l'image numérique de l'article, de sa valeur de singularité signée et de la configuration de son voisinage local circulaire.

La configuration de voisinage local circulaire selon l'invention pour un point d'intérêt consiste à mesurer l'accumulation des valeurs signées de singularité sur les anneaux d'un disque de voisinage centré sur le point d'intérêt décrit.

Ce descripteur ci-après dit descripteur "DoGS" ou "Descriptors of Gradient Singularities" est un signal dont la dimension fixe représente le rayon de description spatiale du point singulier, par exemple 30 pixels ce qui correspond à un rayon de description de 15mm.

A l'issue de l'étape 32, l'image numérique I d'un article est identifiée de façon unique par une signature numérique sous la forme d'un ensemble de descripteurs "DoGS" de points d'intérêt dont chacun code la position spatiale d'un point d'intérêt, sa valeur de singularité signée et le signal de description des singularités dans un voisinage circulaire.

Il faut comprendre qu'à l'étape 21 pour former une signature courante à partir de l'image courante d'un article présenté en seconde passe de tri, on réalise les étapes 30 à 32 de la figure 3.

Maintenant sur la figure 4, on a illustré plus en détail l'étape 22 du procédé selon l'invention pour apparier par similarités des descripteurs "DoGS" deux signatures numériques.

Sur la figure 4, à l'étape 40, suivant la complétude ou non des images d'article comparées, on peut réaliser un filtrage des signatures enregistrées à l'étape 12 sur la figure 1 de façon à réduire l'espace de recherche pour l'appariement d'une des premières signatures avec la signature courante.

En particulier, on filtre lesdites premières signatures pour éliminer celles qui comportent un nombre de descripteurs de point d'intérêt "DoGS" très différent du nombre de descripteurs de point d'intérêt "DoGS" de la signature courante.

Sur la figure 4, on a illustré un espace de recherche E contenant les premières signatures SigP1 à SigPn.

Ensuite à l'étape 41, on recherche la concordance maximale de similarité entre les descripteurs "DoGS" de points d'intérêt de la signature courante SigC et les descripteurs "DoGS" des point d'intérêt de chacune des premières signatures SigPi de l'espace de recherche.

Comme illustré sur la figure 4, la recherche de concordance maximale est réalisée sur l'ensemble de l'espace de recherche E.

A l'issue de l'étape 41, une première signature SigPj a été trouvée comme étant concordante avec la signature courante dans l'étape 42.

A partir de cette première signature, les données de tri DATA peuvent être récupérées dans la base de données 100 illustré sur la figure 2.

Mais l'appariement des descripteurs "DoGS" peut se réaliser sur l'ensemble de l'espace de recherche E en deux phases distinctes :
- une première phase de recherche de concordance dans laquelle on ne va chercher à apparier qu'un nombre restreint de descripteurs "DoGS" de signatures SigC de sorte à présélectionner un sous-ensemble de signatures appartenant à une même famille structurelle que celle de la signature SigC recherchée, c'est-à-dire dont les images contiennent des structures symboliques communes;
- une seconde phase de recherche de concordance dans laquelle on va chercher à apparier l'ensemble complet des descripteurs "DoGS" au sein du sous-ensemble des premières signatures présélectionnées dans la phase précédente.

Dans la première phase, l'appariement des descripteurs "DoGS" n'est réalisé que sur une petite partie de descripteurs "DoGS". Ces descripteurs "DoGS" sont par exemple ceux qui présentent la plus forte singularité absolue dans l'image par rapport à une valeur de seuil, ou encore ceux qui correspondent à une zone précise de l'image (bloc d'adresse expéditeur, etc...). Pour chaque signature candidate SiGC, un faible nombre de descripteurs "DoGS" (représentatifs d'une famille structurelle d'images qui partagent par exemple une même structure graphique ou textuelle) sont comparés aux descripteurs "DoGS" correspondants de chaque signature SiGPj de l'espace de recherche E pour présélectionner un sous-ensemble de premières signatures "compatibles" sur lesquelles on réalisera ensuite la seconde phase de recherche de concordance en utilisant tous les descripteurs "DoGS" de la signature courante.

Le procédé selon l'invention peut s'appliquer à des objets postaux en mouvement pendant la formation des images numériques ou à des objets postaux statiques pendant la formation des images numériques. Suivant le cas, entre deux prises d'image d'un même objet postal, on peut avoir des variations de luminance dues aux changements d'éclairement de la scène ou à une variation de la profondeur de champ de la caméra.

A noter que les variations d'éclairement de la scène peuvent modifier le nombre de points d'intérêt détectés dans les images qui sont comparées, sans contrarier pour autant le processus d'appariement des descripteurs "DoGS".

A l'inverse la variation de profondeur du champ de la caméra peut provoquer des variations de résolution dans les images ce qui peut contrarier la mise en concordance des descripteurs "DoGS". Pour s'affranchir de cette variabilité, et sans sortir du cadre du procédé selon l'invention, on peut effectuer de manière conditionnelle dans le processus de recherche de concordance, une mise à l'échelle automatique des signatures d'images par dilatation ou contraction des descripteurs "DoGS" comparés.

Le procédé selon l'invention est tolérant aux déplacements relatifs de l'objet postal entre ces deux prises d'image, par exemple en rotation ou en translation, ou les deux à la fois. Cette variabilité provoque un changement de position des points d'intérêt entre deux passes d'acquisition d'une image d'un même article, ce qui peut compliquer la mise en correspondance de ces points d'intérêt. Une méthode pour s'affranchir de cette variabilité sans sortir du cadre de l'invention peut consister à effectuer au moment de la présélection d'une première signature une approximation de la transformation rigide globale. Cette approximation peut être calculée par minimisation au sens des moindres carrés de la distance entre les quelques descripteurs "DoGS" mis en correspondance lors de la première phase de mise en concordance. Les paramètres de la transformation approximée peuvent aussi être utilisés lors de la seconde phase de mis en concordance pour projeter les coordonnées spatiales de chaque point d'intérêt de la signature SigC recherchée dans l'espace de l'image numérique associée à la signature SigPi comparée.

Par ailleurs, on comprend que les descripteurs "DoGS" permettent d'individualiser des images numériques d'objets postaux fortement similaires graphiquement par des singularités qui sont indépendantes de la reconnaissance symbolique du bloc d'adresse de destinataire dans ces images.

Bien entendu, le procédé selon l'invention peut s'appliquer à différents traitements d'articles, comme le tri de colis/valises ou analogues transportés sur tapis. Il est apte à fonctionner sur différents systèmes d'acquisition d'images.

## Revendications

1. Procédé de traitement d'articles postaux selon lequel on forme (10) une première image numérique d'un article à une résolution de 2 à 10 pixels/mm et on dérive (12) de cette première image une première signature d'image (SigPi) qui est un identificateur unique pour ledit article, et dans lequel on forme (20) de nouveau une image numérique courante pour ledit article et on dérive (21) de l'image courante une signature courante (SigC) qui est comparée (42) à des premières signatures d'images d'articles enregistrées en mémoire dans une unité de traitement de données pour apparier par similarité cette signature courante avec une des premières signatures, **caractérisé en ce que** chaque signature est dérivée d'une image numérique selon les étapes suivantes :
- extraction (30) d'une carte numérique du champ de gradient de luminance de la dite image par régression planaire locale avec une matrice locale de par exemple 5x5 pixels avec ou sans chevauchement de façon à lisser dans la carte du champ de gradient les déformations de surface de l'article postal et rehausser l'information symbolique contenue dans l'image comme les caractères textuels et les graphismes contrastés,
- identification (31) dans ladite carte numérique des points d'intérêt les plus robustes qui sont les singularités topologiques du champ de gradient de plus forte amplitude du champ vectoriel et qui correspondent à un extremum de divergence circulaire locale du champ de gradient qui apparait dans les régions concaves des éléments symboliques dans l'image ou aux extrémités des éléments symboliques dans l'image tels que les caractères alphanumériques du bloc d'adresse de destinataire,
- et représentation en mémoire par des descripteurs numériques (DoGS) des points d'intérêt qui sont indicatifs chacun pour un certain point d'intérêt :
a) d'une position spatiale du point d'intérêt dans ladite image,
b) d'un indice signé de singularité qui est calculé à partir d'une combinaison de différentes grandeurs physiques incluant une valeur de divergence circulaire moyenne du champ de gradient et de l'amplitude moyenne du champ de gradient dans une fenêtre d'analyse de pixels de l'image centrée sur ledit certain point d'intérêt, et
c) d'une accumulation d'indices de singularité calculés sur les anneaux d'un disque de voisinage local circulaire centré sur ledit certain point d'intérêt.

2. Procédé selon la revendication 1, **caractérisé en ce que** pour comparer ladite signature courante aux dites premières signatures, on filtre (40) d'abord lesdites premières signatures pour éliminer de l'espace de recherche de concordance celles qui sont définies par un nombre de descripteurs de point d'intérêt très différent du nombre de descripteurs de point d'intérêt de la signature courante.

3. Procédé selon la revendication 1, **caractérisé en ce que** pour comparer ladite signature courante aux dites premières signatures, on réalise une première phase de recherche de concordance en utilisant dans la signature courante une petite partie des descripteurs de point d'intérêt pour présélectionner un sous-ensemble de premières signatures compatibles à la signature courante et une seconde phase de recherche de concordance sur ledit sous-ensemble de premières signatures compatibles en utilisant dans la signature courante l'ensemble des descripteurs de point d'intérêt.

4. Procédé selon l'une des revendications précédentes, **caractérisé en ce que** les premières signatures sont enregistrées en mémoire d'une machine de tri postal automatique lors d'une première passe de tri des articles postaux et **en ce que** la comparaison de signatures est réalisée lors d'une seconde passe de tri de ces articles postaux dans cette machine ou dans une autre machine de tri automatique.

## Patentansprüche

1. Verfahren zur Verarbeitung postalischer Gegenstände, bei dem ein erstes digitales Bild eines Gegenstands mit einer Auflösung von 2 bis 10 Pixeln/mm erzeugt wird (10) und aus diesem ersten Bild eine erste Bildsignatur (SigPi) abgeleitet wird (12), die ein eindeutiger Identifikator für den Gegenstand ist, und bei dem erneut ein laufendes digitales Bild für den Gegenstand erzeugt wird (20) und von dem laufenden Bild eine laufende Signatur (SigC) abgeleitet wird (21), die mit in einem Speicher in einer Datenverarbeitungseinheit aufgenommenen ersten Bildsignaturen von Gegenständen verglichen wird (42) zum Verknüpfen dieser laufenden Signatur mit einer der ersten Signaturen aufgrund der Ähnlichkeit,
**dadurch gekennzeichnet,**
**dass** jede Signatur abgeleitet wird von einem digitalen Bild gemäß der folgenden Schritte:
- Extraktion (30) einer digitalen Karte des Gradientenfelds der Leuchtdichte des Bildes durch lokale planare Regression mit einer lokalen Matrix von beispielsweise 5x5 Pixeln mit oder ohne Überlappung zum Glätten der Deformationen der Oberfläche des postalischen Gegenstands in der Karte des Gradientenfeldes und zum Hervorheben der in dem Bild enthaltenen symbolischen Information wie der Textzeichen und der kontrastierten Schriftzüge,
- Identifikation (31), in der digitalen Karte, der robustesten Interessenpunkte, die topologische Singularitäten des Gradientenfelds mit der stärksten Amplitude des Vektorfeldes sind und die einem lokalen Extremum der lokalen zirkularen Divergenz des Gradientenfeldes entsprechen, das in den konkaven Bereichen der symbolischen Elemente in dem Bild oder an den Extremitäten der symbolischen Elemente in dem Bild, wie alphanumerische Zeichen des Adressblocks des Empfängers, auftritt,
- und Darstellung im Speicher durch digitale Deskriptoren (DoGS) der Interessenpunkte, die jeder für einen bestimmten Interessenpunkt angeben:
a) eine räumliche Position des Interessenpunktes in dem Bild,
b) einen mit der Singularität signierten Index, der berechnet wird ausgehend von einer Kombination der verschiedenen physikalischen Größen, umfassend einen Wert der mittleren zirkularen Divergenz des Gradientenfeldes und der mittleren Amplitude des Gradientenfeldes in einem Analysefenster der Pixel des auf den bestimmten Interessenpunkt zentrierten Bildes, und
c) eine Häufung von berechneten Singularitätsindizes auf den Ringen einer auf den bestimmten Interessenpunkt zentrierten lokalen zirkularen Nachbarschaftsscheibe.

2. Verfahren nach Anspruch 1, **dadurch gekennzeichnet, dass** zum Vergleichen der laufenden Signatur mit den ersten Signaturen zunächst die ersten Signaturen gefiltert werden (40), um aus dem Konkordanzsuchraum diejenigen zu eliminieren, die durch eine von der Anzahl der Deskriptoren von Interessenpunkten der laufenden Signatur sehr verschiedenen Anzahl von Deskriptoren von Interessenpunkten definiert sind.

3. Verfahren nach Anspruch 1, **dadurch gekennzeichnet, dass** zum Vergleichen der laufenden Signatur mit den ersten Signaturen eine erste Konkordanzsuchphase unter Verwendung eines kleinen Teils der Deskriptoren von Interessenpunkten in der laufenden Signatur zum Vorauswählen einer Untermenge von mit der laufenden Signatur kompatiblen ersten Signaturen und eine zweite Konkordanzsuchphase unter Verwendung der Gesamtheit der Deskriptoren von Interessenpunkten in der laufenden Signatur über die Untermenge von kompatiblen ersten Signaturen ausgeführt wird.

4. Verfahren nach einem der vorhergehenden Ansprüche, **dadurch gekennzeichnet, dass** die ersten Signaturen in einem Speicher einer automatischen Postsortiermaschine während eines ersten Sortierdurchgangs der postalischen Gegenstände gespeichert werden, und dass der Vergleich der Signaturen während eines zweiten Sortierdurchgangs dieser postalischen Gegenstände in dieser Maschine oder in einer anderen automischen Sortiermaschine durchgeführt wird.

## Claims

1. A method of processing postal articles wherein a first digital image of an article is formed (10) at a resolution of 2 pixels/mm to 10 pixels/mm and a first image signature (SigPᵢ) is derived (12) from this first image, which signature is a unique identifier for said article, and in which a current digital image for said article is formed (20) again and a current signature (SigC) is derived (21) from the current image and compared (42) with first signatures of article images stored in memory in a data processor unit in order to pair-off the current signature with one of the first signatures on the basis of similarity, the method being **characterized in that** each signature is derived from a digital image by the following steps:
• extracting (30) a digital map of the luminance gradient field of said image by local planar regression with a local matrix, e.g. of 5×5 pixels, and with or without overlap, so as to smooth surface deformations of the postal article in the gradient field map, and so as to enhance the symbol information contained in the image, such as text characters and high-contrast graphics;
• identifying (31) in said digital map the most robust points of interest, which are the topological singularities of the gradient field having the greatest amplitude of the vector field, and which correspond to a local circular divergence extremum of the gradient field that appears in concave regions of the symbol elements in the image or at the ends of symbol elements in the image such as the alphanumeric characters of the destination address block; and
• representing points of interest in memory by means of digital descriptors (DOGS), each of which is representative, for a certain point of interest:
a) of a spatial position of a point of interest in said image;
b) of a signed singularity index that is calculated from a combination of various physical magnitudes including a mean value of circular divergence of the gradient field and of the mean amplitude of the gradient field in a pixel analysis window of the image centered on said certain point of interest; and
c) accumulating singularity indices calculated on the rings of a circular local neighborhood disk centered on said certain point of interest.

2. A method according to claim 1, **characterized in that** in order to compare said current signature with said first signatures, said first signatures are initially filtered (40) in order to eliminate from the matched search space those that are defined by a number of point of interest descriptors that is very different from the number of points of interest descriptors of the current signature.

3. A method according to claim 1, **characterized in that** in order to compare said current signature with said first signatures, a first match searching stage is performed using a small portion of the point of interest descriptors in the current signature in order to preselect a subset of first signatures that are compatible with the current signature, and a second match search stage over said subset of compatible first signatures making use in the current signature of all of the point of interest descriptors.

4. A method according to any preceding claim, **characterized in that** the first signatures are stored in memory in an automatic postal sorting machine during a first sorting pass of postal articles, and **in that** the signature comparison is performed during a second sorting pass of the postal articles through the same machine or through another automatic sorting machine.
